# EUROPÄISCHE PATENTSCHRIFT

(11) **EP 3 670 944 B1**
(45) Veröffentlichungstag und Bekanntmachung des Hinweises auf die Patenterteilung: **18.08.2021**
(21) Anmeldenummer: 18213201.9
(22) Anmeldetag: 17.12.2018
(51) Int. Cl.: F16C 29/04, F16C 33/30, A47B 88/493, A47B 88/45, A47B 88/447

(54) **TELESKOPSCHIENE MIT MINDESTENS DREI SCHIENENELEMENTEN**
TELESCOPIC RAIL WITH AT LEAST THREE RAIL ELEMENTS
RAIL TÉLESCOPIQUE POURVU D'AU MOINS TROIS ÉLÉMENTS DE RAIL

(43) Veröffentlichungstag der Anmeldung: 24.06.2020
(73) Patentinhaber: Nadella GmbH, 71154 Nufringen (DE)
(72) Erfinder: Schwertner, Thomas, 82515 Wolfratshausen (DE); Schilli, David, 77797 Ohlsbach (DE)
(74) Vertreter: Pistorius, Richard

(56) Entgegenhaltungen:
- FR-A- 730 922
- US-A- 3 687 505
- US-A1- 2017 086 584

## Beschreibung

Die vorliegende Erfindung betrifft eine Teleskopschiene mit einer ersten und einer zweiten Führungsschiene und mit einer Zwischenschiene, wobei die erste Führungsschiene über Wälzkörper an einer ersten Laufbahn der Zwischenschiene zwangsgeführt ist und die zweite Führungsschiene an einer zweiten, zur ersten Laufbahn parallel verlaufenden Laufbahn der Zwischenschiene zwangsgeführt ist.

Aus dem Stand der Technik, z.B. aus den Dokumenten US 3,687,505, DE 42 26 812 B4, US 3,078,129, DE 10 2012 009 296 B4, DE 20 2015 100 603 U1, EP 1 571 357 A1, DE 10 2014 119 729 A1, EP 0 046 531 A2 und US 2016/0128472 A1, ist eine derartige Teleskopschiene mit einer ersten und zweiten Führungsschiene, einer Zwischenschiene, sowie mit Wälzkörpern zur Führung der Führungsschienen an der Zwischenschiene bekannt. Dabei ist die Zwischenschiene jeweils mit zwei Laufbahnen versehen, an denen die Führungsschienen zwangsgeführt sind. Des Weiteren sind die Wälzkörper jeweils in Wälzkörperkäfigen angeordnet. US 3 687 505 A offenbart eine Teleskopschiene nach dem Oberbegriff des Anspruchs 1.

Nachteilig ist bei diesen gebräuchlichen Teleskopschienen jedoch, dass die Führungsschienen in der Regel nicht auf geeignete Art und Weise miteinander synchronisiert sind. Dies kann insbesondere bei einem Verfahren der Teleskopschiene von der zusammengefahrenen Position in die ausgefahrene Position zu einem ungleichmäßigen und unvollständigen Ausfahren der Teleskopschiene führen. Des Weiteren weisen die in Wälzkörperkäfigen angeordneten Wälzkörper aufgrund von einer vergleichsweisen geringen Tragfähigkeit eine begrenzte Lebensdauer auf.
Es ist deshalb eine Aufgabe der vorliegenden Erfindung, eine Teleskopschiene mit einer ersten und einer zweiten Führungsschiene und mit einer Zwischenschiene, sowie mit Wälzkörpern zur Führung der Führungsschienen an der Zwischenschiene bereitzustellen, bei der die erste und zweite Führungsschiene auf geeignete Art und Weise miteinander synchronisiert sind und gleichzeitig eine verlängerte Lebensdauer der Wälzkörper realisiert werden kann.

Diese Aufgabe wird gelöst durch eine Teleskopschiene gemäß der vorliegenden Erfindung. Hierbei weist die Teleskopschiene erfindungsgemäß eine erste und eine zweite Führungsschiene und eine Zwischenschiene auf, wobei die erste Führungsschiene über Wälzkörper an einer ersten Laufbahn der Zwischenschiene zwangsgeführt ist und die zweite Führungsschiene über Wälzkörper an einer zweiten, zur ersten Laufbahn parallel verlaufenden Laufbahn der Zwischenschiene zwangsgeführt ist. Die erste und zweite Führungsschiene sowie die Zwischenschiene sind über mindestens zwei längliche Verbindungselemente bei einem Bewegen von einer zusammengefahrenen Position in eine ausgefahrene Position, oder umgekehrt, synchronisiert, wobei an der ersten Führungsschiene ein erstes Ende eines ersten Verbindungselements, sowie ein zweites Ende eines zweiten Verbindungselements und an der zweiten Führungsschiene ein zweites Ende des ersten Verbindungselements, sowie ein erstes Ende des zweiten Verbindungselements fixiert sind. Die Wälzkörper zum Führen der ersten und zweiten Führungsschiene an der Zwischenschiene sind jeweils in einem Wälzkörperschlitten geführt, wobei jeder Wälzkörperschlitten zumindest eine in sich geschlossene Umlaufbahn zum Führen der Wälzkörper aufweist und die Wälzkörperschlitten mit der ersten und/oder zweiten Führungsschiene über eine Schraubverbindung, Schweißverbindung, Pressverbindung, Klebeverbindung oder Formschlussverbindung verbunden sind.

Die Erfindung ermöglicht somit die Bereitstellung einer Teleskopschiene, bei der durch die im Wälzkörperschlitten angeordneten Wälzkörper einfach und unkompliziert eine Synchronisierung der Führungsschienen mit einer verbesserten Tragfähigkeit erreicht werden kann. Somit kann ein gleichmäßiges und sicheres Verfahren von der zusammengefahrenen Position in die ausgefahrene Position, oder umgekehrt, ermöglicht werden. Darüber hinaus kann sicher und zuverlässig die Lebensdauer der Wälzkörper verlängert werden, da eine Lastverteilung der auf die Wälzkörper wirkenden Lasten ermöglicht werden kann. Darüber hinaus kann eine einfache und stabile Anordnung des Wälzkörperschlittens durch ein Befestigen auf der ersten und/oder zweiten Führungsschiene ermöglicht werden.

Die in sich geschlossenen Umlaufbahnen weisen bevorzugt jeweils einen Rückführungsabschnitt und einen Führungsabschnitt auf, wobei die Wälzkörper am Führungsabschnitt an der jeweiligen Laufbahn der Zwischenschiene geführt sind und der Rückführungsabschnitt innerhalb des Wälzkörperschlittens angeordnet ist. Somit kann auf einfache Art und Weise die geschlossene Umlaufbahn bereitgestellt werden.

Gemäß einer Ausführungsform weist der Wälzkörperschlitten einen Grundkörper auf, der an seinen axialen Enden jeweils ein Umlenkelement mit einem gekrümmten Laufbahnabschnitt zum Umlenken der Wälzkörper vom Führungsabschnitt in den Rückführungsabschnitt, und umgekehrt, aufweist. Somit kann eine leichte und unkomplizierte Ausbildung der Umlaufbahn ermöglicht werden.

Bevorzugt weist der Wälzkörperschlitten zumindest ein Laufbahnteil zum Führen der Wälzkörper an der Zwischenschiene auf, wobei das Laufbahnteil über eine Feder-Nut-Verbindung am Wälzkörperschlitten angeordnet ist. Somit kann ein anwendungsspezifischer Wälzkörperschlitten bereitgestellt werden.

Vorzugsweise weist das Laufbahnteil den Führungsabschnitt auf. Somit kann ein geeignetes Laufbahnteil bereitgestellt werden.

Bevorzugt sind die Verbindungselemente an der jeweiligen Führungsschiene jeweils über zugeordnete Befestigungselemente fixiert, wobei die zugeordneten Befestigungselemente als Verfahrwegsbegrenzung der ersten und zweiten Führungsschiene an der Zwischenschiene in der ausgefahrenen Position ausgebildet sind. Somit kann auf einfache Art und Weise eine Synchronisation ermöglicht werden.

Vorzugsweise ist zumindest ein zugeordnetes Befestigungselement an einer der Zwischenschiene zugewandten Längsseite der ersten und/oder zweiten Führungsschiene angeordnet. Somit kann einfach und unkompliziert die Bereitstellung einer kompakten Anordnung mit dem zumindest einen Befestigungselement ermöglicht werden.

Bevorzugt ist an dem zweiten Ende des ersten Verbindungselements und/oder dem zweiten Ende des zweiten Verbindungselements eine Spannvorrichtung zum manuellen Spannen des ersten und/oder zweiten Verbindungselements vorgesehen. Somit kann einfach und unkompliziert eine geeignete Spannung der Verbindungselemente eingestellt werden.

Der Wälzkörperschlitten weist vorzugsweise einen Aufnahmebereich zur Anordnung der Spannvorrichtung auf. Somit kann eine kompakte Ausbildung der Teleskopschiene ermöglicht werden.

Gemäß einer Ausführungsform ist das erste und/oder zweite Verbindungselement nach Art eines Seils, eines Riemens und/oder einer Kette ausgebildet und dazu ausgebildet, Druckkräfte und/oder Zugkräfte aufzunehmen. Somit kann ein kostengünstiges und stabiles Verbindungselement bereitgestellt werden.

Die Zwischenschiene weist bevorzugt an jedem ihrer Enden zumindest eine Rolle zum Umlenken des ersten und/oder zweiten Verbindungselements auf. Somit kann auf einfache Art und Weise eine Führungsschiene mit der Zwischenschiene verbunden werden, wodurch die Zwangsführung der entsprechenden Führungsschiene an der Zwischenschiene ermöglicht werden kann.

Vorzugsweise weisen die erste und zweite Führungsschiene sowie die Zwischenschiene jeweils eine Länge auf, die einer ersten Länge der Teleskopschiene in der zusammengefahrenen Position entspricht, wobei die Teleskopschiene in der ausgefahrenen Position eine zweite Länge aufweist, die zumindest annähernd der doppelten ersten Länge entspricht, und wobei ein relativer Verfahrweg zwischen der ersten Führungsschiene und der Zwischenschiene sowie der zweiten Führungsschiene und der Zwischenschiene zum Bewegen der Teleskopschiene von der zusammengefahrenen Position in die ausgefahrene Position, oder umgekehrt, jeweils zumindest annähernd der Hälfte der ersten Länge entspricht. Somit kann eine Hubverkürzung ermöglicht werden, wodurch eine kompakte Teleskopschiene bereitgestellt werden kann.

Gemäß einer Ausführungsform ist die Zwischenschiene über eine direkte Anbindung mit einer translatorischen Bewegungseinheit verbindbar. Somit kann auf einfache Art und Weise eine Anbindung an einen Antrieb zum Verfahren der Teleskopschiene in die zusammengefahrene und/oder ausgefahrene Position ermöglicht werden.

Die Erfindung ist anhand von in den Zeichnungen dargestellten Ausführungsbeispielen in der nachfolgenden Beschreibung näher erläutert. Es zeigen:
- Fig. 1: eine perspektivische Seitenansicht einer erfindungsgemäßen Teleskopschiene,
- Fig. 2: einen vergrößerten Ausschnitt der Teleskopschiene von Fig. 1,
- Fig. 3: eine Seitenansicht des Ausschnitts von Fig. 2 zur Verdeutlichung eines Befestigungselements,
- Fig. 4: eine perspektivische Ansicht des Ausschnitts von Fig. 3,
- Fig. 5: eine Seitenansicht eines Ausschnitts der Teleskopschiene von Fig. 1 mit einem weiteren Befestigungselement,
- Fig. 6: eine schematische Draufsicht auf die Teleskopschiene von Fig. 1 mit den Befestigungselementen von Fig. 3 und Fig. 5 in einer zusammengefahrenen Position,
- Fig. 7: eine schematische Draufsicht auf die Teleskopschiene von Fig. 6 in einer ausgefahrenen Position,
- Fig. 8: eine schematische Draufsicht auf eine weitere Teleskopschiene mit den Befestigungselementen von Fig. 3 und Fig. 5 in einer zusammengefahrenen Position,
- Fig. 9: eine schematische Draufsicht auf die Teleskopschiene von Fig. 8 in einer ausgefahrenen Position,
- Fig. 10: eine schematische Ansicht der Teleskopschiene von Fig. 9,
- Fig. 11: eine perspektivische Ansicht der Teleskopschiene von Fig. 1 in der zusammengefahrenen und der ausgefahrenen Position,
- Fig. 12: eine Draufsicht auf eine der Teleskopschiene zugeordnete Zwischenschiene mit zwei Wälzkörperschlitten,
- Fig. 13: eine perspektivische Ansicht des Wälzkörperschlittens von Fig. 12,
- Fig. 14: eine perspektivische Seitenansicht der Zwischenschiene mit dem Wälzkörperschlitten von Fig. 12,
- Fig. 15: eine perspektivische Draufsicht auf den Wälzkörperschlitten von Fig. 12 bis Fig. 14 mit einem Deckelelement,
- Fig. 16: eine perspektivische Draufsicht auf den Wälzkörperschlitten ohne das Deckelelement von Fig. 15 zur Verdeutlichung eines Umlenkteils,
- Fig. 17: eine perspektivische Draufsicht auf einen dem Wälzkörperschlitten von Fig. 16 zugeordneten Grundkörper, und
- Fig. 18: eine perspektivische Draufsicht auf eine dem Grundkörper von Fig. 17 zugeordnete Laufbahn.

In der nachfolgenden Beschreibung beziehen sich die Begriffe links, rechts, vorne, hinten, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben.

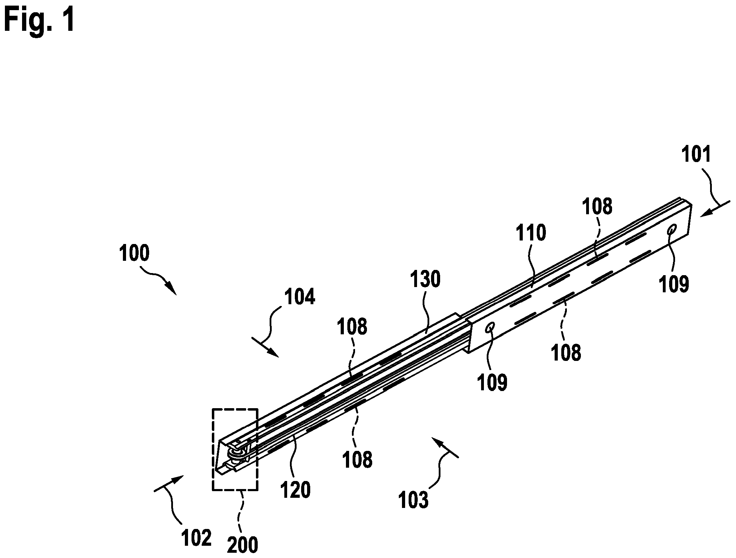

Fig. 1 zeigt eine erfindungsgemäße Teleskopschiene 100 mit einem ersten axialen Ende 101 und einem zweiten axialen Ende 102, sowie einer illustrativ vorderen Seite 103 und einer illustrativ hinteren Seite 104. Die Teleskopschiene 100 weist vorzugsweise zumindest eine erste und zweite Führungsschiene 110, 130 sowie mindestens eine Zwischenschiene 120 auf.

In Fig. 1 ist eine illustrativ rechts angeordnete erste Führungsschiene 110 sowie eine illustrativ links angeordnete zweite Führungsschiene 130 gezeigt. Dabei ist die erste Führungsschiene 110 der vorderen Seite 103 zugewandt angeordnet, und die zweite Führungsschiene 130 ist der hinteren Seite 104 zugewandt angeordnet. Erfindungsgemäß sind die erste und zweite Führungsschiene 110, 130 an der Zwischenschiene 120 zwangsgeführt.

Es wird darauf hingewiesen, dass in Fig. 1 zur Vereinfachung der Zeichnung lediglich eine einzelne Zwischenschiene 120 gezeigt ist, sodass nachfolgend zwecks Einfachheit und Klarheit nur auf "die Zwischenschiene 120" Bezug genommen wird. Allerdings können auch zwei oder mehr Zwischenschienen Anwendung finden, wobei diese dann zumindest teilweise aneinander zwangsgeführt werden.

Bevorzugt weisen die erste und zweite Führungsschiene 110, 130 sowie die Zwischenschiene 120 ein offenes Profil auf. Die erste und zweite Führungsschiene 110, 130 weisen dabei vorzugsweise ein C-förmiges, U-förmiges, doppel-T-förmiges oder ein flaches Profil auf.

Die Zwischenschiene 120 weist bevorzugt ein U-förmiges, S-förmiges oder doppel-T-förmiges Profil auf. Dabei kann die Zwischenschiene 120 einstückig oder mehrstückig, z.B. zweistückig, ausgebildet sein. Bei einer beispielhaften zweistückigen Ausführungsform der Zwischenschiene 120 weist diese vorzugsweise zwei U-Profile oder zwei C-förmige Profile auf, die über eine beliebige Verbindung, z.B. eine Schweißverbindung, miteinander verbunden sind.

Die erste und zweite Führungsschiene 110, 130 weisen vorzugsweise jeweils zumindest ein Befestigungselement 109 auf. Das Befestigungselement 109 ist bevorzugt nach Art einer Ausnehmung, einer Schraube und/oder eines Stifts ausgebildet. Das Befestigungselement 109 ist dabei vorzugsweise dazu ausgebildet, eine Befestigung der Teleskopschiene 100 über eine Führungsschiene 110, 130 an einem Gegenstand zu ermöglichen und/oder eine Verbindung der Teleskopschiene 100 mit einem zu bewegenden Gegenstand zu ermöglichen.

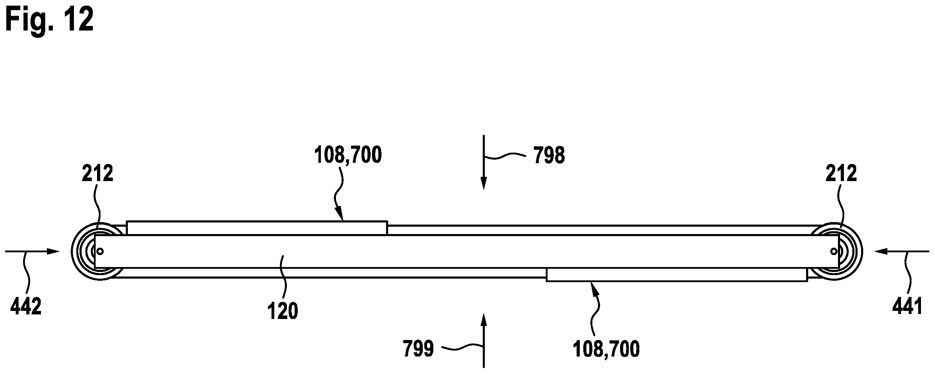

Vorzugsweise ist zumindest eine Führungsschiene 110, 130 über Wälzkörper 108 an der Zwischenschiene 120 geführt. Illustrativ und vorzugsweise sind die erste und zweite Führungsschiene 110, 130 über Wälzkörper 108 an der Zwischenschiene 120 geführt. Dabei sind die Wälzkörper 108 vorzugsweise in einem Wälzkörperschlitten (700 in Fig. 12) angeordnet.

Hierbei kann ein Wälzkörperschlitten (700 in Fig. 12) an einer illustrativ oberen und/oder unteren Wälzfläche der jeweiligen Führungsschiene 110, 130 angeordnet sein. Jedoch kann der Wälzkörperschlitten (700 in Fig. 12) auch derart ausgebildet sein, dass er illustrativ obere und untere Wälzkörper 108 miteinander verbindet.

Gemäß einer Ausführungsform sind die Wälzkörper 108 nach Art von Kugeln, Kegeln, Nadeln usw. ausgebildet. Durch die Wälzkörper 108 ist eine mehrachsige Lastaufnahme möglich. Dabei wird eine formschlüssige Synchronisierung realisiert, die keine Rutschkupplung erfordert. Die Synchronisierung ist dabei zumindest abschnittsweise in der Teleskopschiene 100 angeordnet, bevorzugt komplett in der Teleskopschiene 100 platziert.

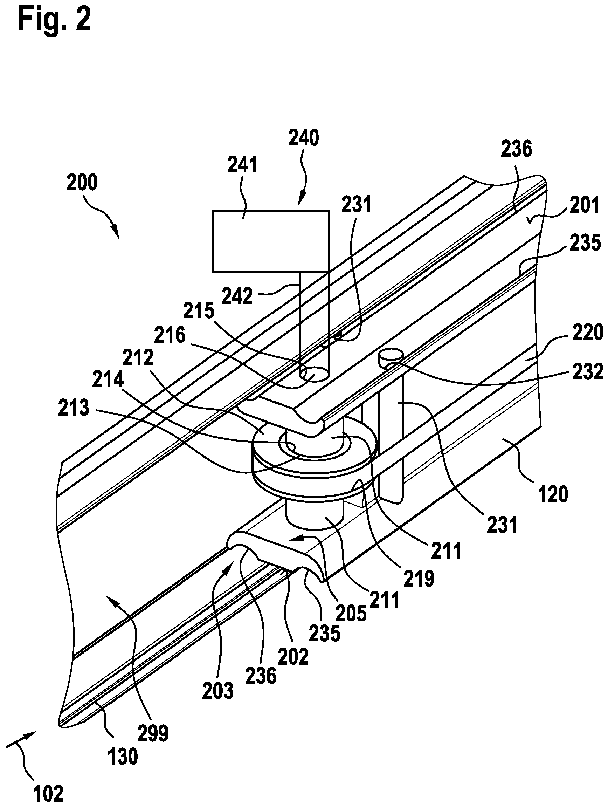

Der Wälzkörperschlitten (700 in Fig. 12) bewegt sich bei einem Verfahren der Teleskopschiene 100 mit der jeweiligen Führungsschiene 110, 130 mit. Des Weiteren zeigt Fig. 1 einen Ausschnitt 200, der nachfolgend in Fig. 2 beschrieben wird.

Fig. 2 zeigt den Ausschnitt 200 von Fig. 1 mit der Zwischenschiene 120 und der zweiten Führungsschiene 130. Die Zwischenschiene 120 weist exemplarisch und vorzugsweise eine Doppel-T-Träger-Form auf und ist illustrativ an einer Innenseite 299 der zweiten Führungsschiene 130, bzw. der Teleskopschiene 100 von Fig. 1, angeordnet.

Illustrativ weist die Zwischenschiene 120 eine obere Seite 201 und eine untere Seite 202 auf, wobei zumindest an der oberen Seite 201 und/oder unteren Seite 202 eine erste Laufbahn 235 und eine zweite Laufbahn 236 zum Zwangsführen der ersten und zweiten Führungsschiene 110, 130 vorgesehen ist. Beispielhaft weist die Zwischenschiene 120 in Fig. 2 eine erste Laufbahn 235 auf der oberen Seite 201 und der unteren Seite 202 auf, wobei die erste Laufbahn 235 exemplarisch im Bereich des linken Endes der oberen und unteren Seite 201, 202 angeordnet ist und zum Führen der ersten Führungsschiene 110 ausgebildet ist. Die zweite Laufbahn 236 ist vorzugsweise parallel zur ersten Laufbahn 235 angeordnet, wobei die zweite Laufbahn 236 illustrativ an einem linken Ende der Zwischenschiene 120 angeordnet ist und zum Führen der zweiten Führungsschiene 130 ausgebildet ist.

Illustrativ weisen die Laufbahnen 235, 236 jeweils eine halbrunde Form auf, sie können jedoch auch eine V-förmige und/oder trapezförmige Form aufweisen. Des Weiteren können die erste und zweite Führungsschiene 110, 130 an ihrer jeweils der Zwischenschiene 120 zugewandten Seite ebenfalls eine Laufbahn aufweisen. Die erste und/oder zweite Laufbahn 235, 236 sind dabei zur Anordnung der Wälzkörper 108 von Fig. 1 ausgebildet. Dabei wird zumindest ein 2-Punkt-Kontakt der Wälzkörper 108 mit der Laufbahn 235, 236 ausgebildet. Vorzugsweise wird ein 3-Punkt-Kontakt oder ein 4-Punkt-Kontakt der Wälzkörper 108 mit der Laufbahn 235, 236 ausgebildet.

Bevorzugt weisen die Laufbahnen 235, 236 einen Herausfallschutz auf. Dieser ist vorzugsweise nach Art eines Stiftes 231 ausgebildet, der bevorzugt in einer Ausnehmung 232, die in der Laufbahn 235, 236 ausgebildet ist, angeordnet ist. Dabei kann der Stift 231 einer illustrativ oberen und/oder unteren Laufbahn 235, 236 zugeordnet sein.

Illustrativ ist der Stift 231 als Herausfallschutz der oberen und unteren Laufbahn 235, 236 ausgebildet. Jedoch kann der Stift 231 auch entweder nur der oberen oder nur der unteren Laufbahn 235, 236 zugeordnet sein, wobei der Stift 231 nicht durchgängig ausgebildet ist.

Des Weiteren kann auch lediglich ein Stift 231 als Herausfallschutz einer Führungsschiene 110, 130 vorgesehen sein. Dabei kann z.B. ein Stift 231 der oberen, linken Laufbahn 235 und ein Stift 231 der unteren, rechten Laufbahn 236 zugeordnet sein. Es wird jedoch darauf hingewiesen, dass dabei die Stifte 231 auch jeweils nur auf der oberen oder unteren Laufbahn 235, 236 angeordnet sein können.

Bevorzugt weisen die Führungsschienen 110, 130 und/oder der Wälzkörperkäfig eine Gegenkontur zum Herausfallschutz bzw. zum Stift 231 auf. Die Gegenkontur kann dabei als Schraube, Stift, Platte und/oder als eingedrückte Stelle ausgebildet sein.

Die erste und zweite Führungsschiene 110, 130 sowie die Zwischenschiene 120 sind bevorzugt über mindestens zwei längliche Verbindungselemente 220 bei einem Bewegen von einer zusammengefahrenen Position in eine ausgefahrene Position, oder umgekehrt, synchronisiert. Die mindestens zwei länglichen Verbindungselemente 220 sind vorzugsweise nach Art eines Seils, eines Riemens und/oder einer Kette ausgebildet.

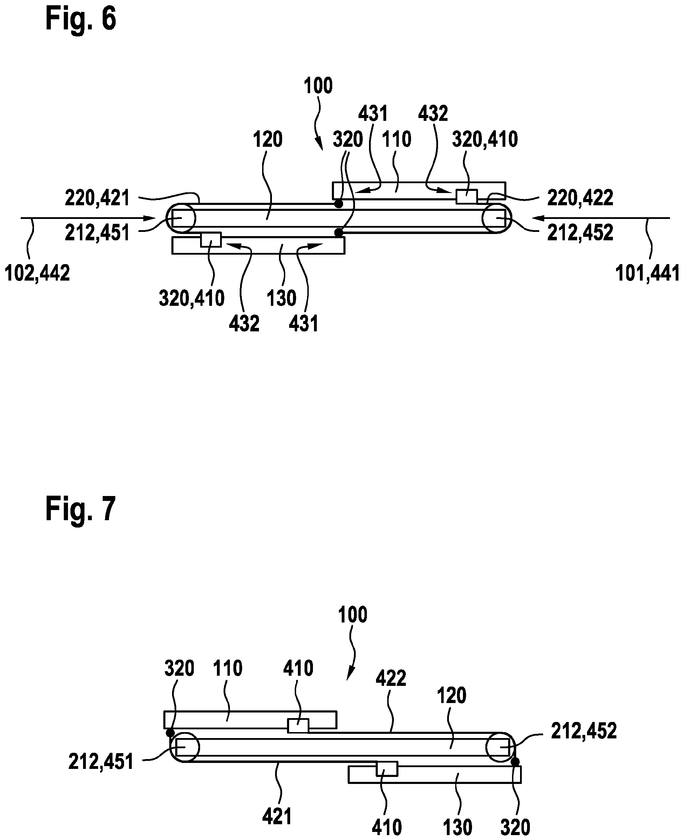

Darüber hinaus sind die mindestens zwei länglichen Verbindungselemente 220 bevorzugt dazu ausgebildet, Druckkräfte und/oder Zugkräfte aufzunehmen. Vorzugsweise weist die Zwischenschiene 120 an jedem ihrer Enden (441, 442 in Fig. 6) zumindest eine Rolle 212 zum Umlenken von mindestens einem Verbindungselement 220 auf.

Die zumindest zwei Rollen 212 sind bevorzugt dazu ausgebildet, ein Drehmoment zu übertragen. Dabei sind die Rollen 212 vorzugsweise antreibbar, bevorzugt elektrisch, mechanisch, pneumatisch und/oder hydraulisch.

Illustrativ weist die Zwischenschiene 120 an ihren axialen Enden 203 jeweils eine Ausnehmung 205 zur Anordnung der Rolle 212 auf. Die Rolle 212 ist dabei vorzugsweise über zumindest ein Lagerelement 213, das illustrativ in einer Aufnahme 214 der Rolle 212 angeordnet ist, auf einem Rotationsübertragungselement 211 angeordnet.

Bevorzugt ist das Rotationsübertragungselement 211 als Welle oder Achse ausgebildet. Dabei kann eine Welle ein Moment aufnehmen und eine Achse nicht. Das Rotationsübertragungselement 211 kann jedoch auch außermittig an der Zwischenschiene 120 angeordnet sein.

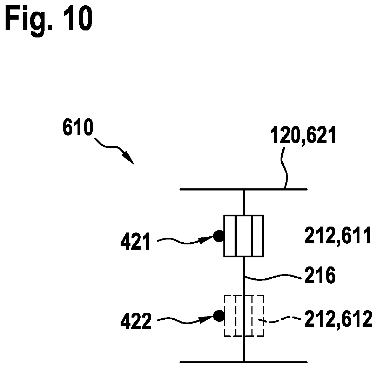

Die Rolle 212 ist bevorzugt fest an der Zwischenschiene 120 angeordnet. Insbesondere ist die Rolle 212 vorzugsweise horizontal an der Zwischenschiene 120 angeordnet. Illustrativ und vorzugsweise ist die Rolle 212 mittig zwischen der oberen Seite 201 und der unteren Seite 202 der Zwischenschiene 120 angeordnet. Jedoch kann die Rolle 212 auch außermittig angeordnet sein, wie beispielhaft bei Fig. 10 beschrieben. Darüber hinaus weist die Rolle 212 bevorzugt eine Aufnahme 219 zum Führen von zumindest einem Verbindungselement 220 auf.

Des Weiteren ist die Rolle 212 vorzugsweise über eine Drehachse 216 mit einer Antriebseinheit 240, z.B. einem Elektromotor 241, verbunden. Dabei ist die Antriebseinheit 240 als translatorische Bewegungseinheit ausgebildet, die nach dem Prinzip des umgekehrten Flaschenzugs arbeitet, d. h. mit doppelter Kraft und dem halben Verfahrweg wird die Teleskopschiene 100 von Fig. 1 komplett ausgefahren bzw. von der zusammengefahrenen Position in die ausgefahrene Position bewegt. Somit kann im Vergleich zum Stand der Technik vorteilhafterweise eine Bauraumreduzierung ermöglicht werden.

Die Drehachse 216 ist dabei bevorzugt in einer Ausnehmung 215 der Zwischenschiene 120 angeordnet bzw. gelagert. Die Ausnehmung 215 ist vorzugsweise an der oberen und unteren Seite 201, 202 der Zwischenschiene 120 ausgebildet.

Darüber hinaus ist die Drehachse 216 vorzugsweise mit einem Antriebselement 242 der Antriebseinheit 240 verbunden. Bevorzugt ist das Rotationsübertragungselement 211 mit der Drehachse 216 drehverbunden. Darüber hinaus ist die Rolle 212 vorzugsweise mittelbar mit der Zwischenschiene 220 verbunden. Dabei wird ein Formschluss ausgebildet.

Es wird jedoch darauf hingewiesen, dass das Lagerelement 213 auch in der Aufnahme 215 angeordnet sein kann. Dabei ist die Rolle 212 direkt mit der Drehachse 216 verbunden.

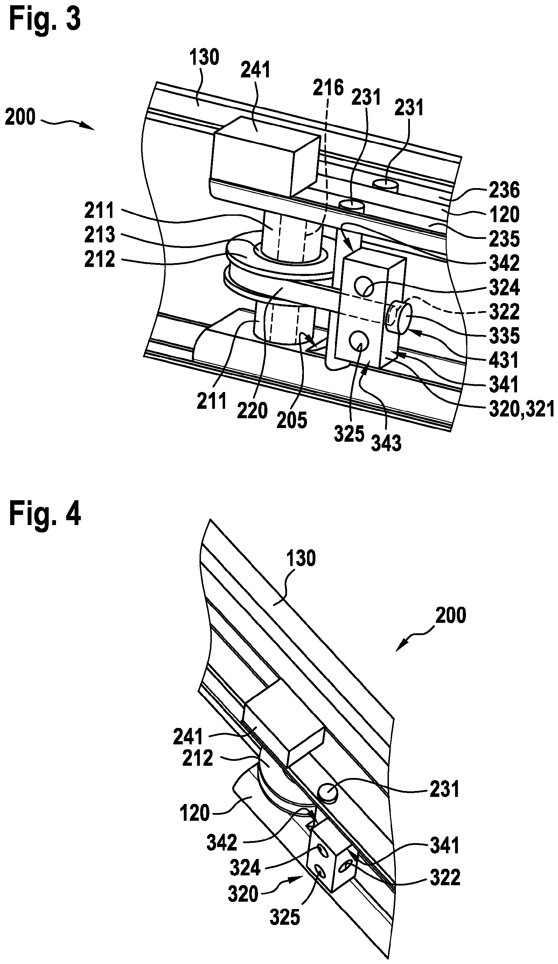

Fig. 3 zeigt den Ausschnitt 200 von Fig. 1 und Fig. 2, zwecks Einfachheit und Übersichtlichkeit jedoch ohne die erste Führungsschiene 110. Dabei verdeutlicht Fig. 3 Mittel zur Befestigung des Verbindungselements 220, bzw. eines Endes 431 des Verbindungselements 220, an der hier nicht dargestellten ersten Führungsschiene 110.

Bevorzugt ist ein Ende 431 des Verbindungselements 220 über zumindest ein zugeordnetes Befestigungselement 320 an der jeweils zugeordneten Führungsschiene 110, 130 befestigt. Das zumindest eine zugeordnete Befestigungselement 320 weist vorzugsweise einen rechteckigen Grundkörper 321 auf.

Bevorzugt ist das zumindest eine zugeordnete Befestigungselement 320 an einer der Zwischenschiene 120 zugewandten Längsseite 299 der ersten und/oder zweiten Führungsschiene 110, 130 angeordnet. Dabei liegt eine dem zumindest einen Befestigungselement 320 zugeordnete Anlagefläche 343 an der jeweiligen Längsseite 299 der jeweiligen Führungsschiene 110, 130 an.

Vorzugsweise ist das zumindest eine zugeordnete Befestigungselement 320 an der ersten und/oder zweiten Führungsschiene 110, 130 angeschraubt. Hierfür weist das zumindest eine Befestigungselement 320 mindestens eine, bevorzugt zwei Ausnehmungen 324, 325 zur Anordnung eines Schraubelements auf. Bevorzugt sind die Ausnehmungen 324, 325 als Sacklochbohrungen ausgebildet.

Es wird jedoch darauf hingewiesen, dass das zumindest eine Befestigungselement 320 auch auf eine beliebig andere Art und Weise an der jeweiligen Führungsschiene 110, 130 angeordnet werden kann. So kann das zumindest eine Befestigungselement 320 beispielhaft auch durch eine Klebeverbindung an der jeweiligen Führungsschiene 110, 130 angeordnet sein. Darüber hinaus kann das zumindest eine Befestigungselement 320 auch einstückig mit der jeweiligen Führungsschiene ausgebildet sein.

Illustrativ weist das Befestigungselement 320 ein erstes und zweites axiales Ende 341, 342 auf. Dabei ist das erste axiale Ende 341 dem ersten Ende 101 der Teleskopschiene 100 zugewandt angeordnet, und das zweite axiale Ende 342 ist dem zweiten Ende 102 der Teleskopschiene 100 zugewandt angeordnet. Bevorzugt weist das Befestigungselement 320 in axialer Richtung eine als Durchgangsbohrung ausgebildete Ausnehmung 322 auf. Die Durchgangsbohrung 322 ist vorzugsweise zur abschnittsweisen Aufnahme des Verbindungselements 220 ausgebildet, insbesondere zur abschnittsweisen Aufnahme eines Endes 431 des Verbindungselements 220.

In der in Fig. 3 gezeigten, ausgefahrenen Position der Teleskopschiene 100 liegt illustrativ das zweite axiale Ende 342 des Befestigungselements 320 abschnittsweise an dem Stift 231 an, der in der Laufbahn 235 angeordnet ist. Darüber hinaus liegt bevorzugt ein Blockierelement 335 des Verbindungselements 220 am ersten Ende 341 des Befestigungselements 320 an.

Das Blockierelement 335 weist vorzugsweise einen größeren Grundkörper auf, als die Ausnehmung 322 des Befestigungselements 320. Dabei ist das Blockierelement 335 bevorzugt dazu ausgebildet, das Verbindungselement 220 am Befestigungselement 320 zu fixieren. Vorzugsweise ist das Blockierelement 335 an dem Ende 431 des Verbindungselements 220 angeordnet, insbesondere aufgepresst.

Illustrativ ist die Ausnehmung 322 in horizontaler Richtung des Befestigungselements 320 zwischen den Ausnehmungen 324, 325 angeordnet. Es wird jedoch darauf hingewiesen, dass die Ausnehmung 322 auch außermittig angeordnet werden kann. Insbesondere ist die Ausnehmung 322 analog zur Position der Rolle 212 angeordnet.

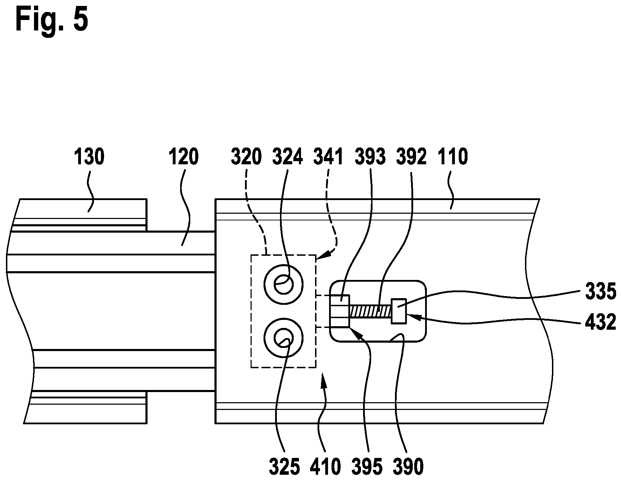

Es wird darauf hingewiesen, dass auch lediglich ein Befestigungselement 320 (und 410 in Fig. 5) an einer Führungsschiene 110, 130 angeordnet sein kann. Dabei kann das Befestigungselement 320 (und 410 in Fig. 5) derart ausgebildet sein, dass eine feste Anordnung des Verbindungselements 220 sowie einer Spannvorrichtung (395 in Fig. 5) ermöglicht werden kann.

Fig. 4 zeigt den Ausschnitt 200 von Fig. 3, zwecks Einfachheit und Übersichtlichkeit jedoch ohne das Verbindungselement 220. Dabei verdeutlicht Fig. 4 die Anordnung des Befestigungselements 320 an dem Stift 231 in der ausgefahrenen Position der Teleskopschiene 100. Hierbei zeigt Fig. 4 die Anordnung der Ausnehmung 322, die bevorzugt mittig zur Ausnehmung 324, 325 angeordnet ist.

Fig. 5 zeigt das zweite axiale Ende der Führungsschiene 110 von Fig. 1, wobei dem Befestigungselement 320 von Fig. 3 bevorzugt eine Spannvorrichtung 395 zugeordnet ist. Die Spannvorrichtung 395 ist zum manuellen Spannen des ersten und/oder zweiten Verbindungselements 220 von Fig. 3 ausgebildet. Das Befestigungselement 320 und die Spannvorrichtung 395 bilden dabei vorzugsweise eine Befestigungseinheit 410 aus.

Bevorzugt weist die Führungsschiene 110 im Bereich der Spannvorrichtung 395 eine Ausnehmung 390 zum Bedienen der Spannvorrichtung 395 auf. Analog zum ersten Ende 431 des Verbindungselements 220 weist ein zweites Ende 432 exemplarisch das Blockierelement 335 auf.

Der Spannvorrichtung 395 ist vorzugsweise eine Gewindehülse 392 zugeordnet, die bevorzugt auf einem Außendurchmesser des Verbindungselements 220 angeordnet ist. Zum Spannen der Spannvorrichtung 395 bzw. des Verbindungselements 220 ist vorzugsweise eine Spannmutter 393 vorgesehen, die bevorzugt auf dem Gewinde der Gewindehülse 392 angeordnet ist. Die Spannmutter 393 liegt dabei illustrativ an der Seite 341 des Befestigungselements 320 an.

Fig. 6 zeigt die Teleskopschiene 100 von Fig. 1 mit der ersten und zweiten Führungsschiene 110, 130 sowie der Zwischenschiene 120 in der zusammengefahrenen Position. Dabei verdeutlicht Fig. 6 die Anordnung des Befestigungselements 320 bzw. der Befestigungseinheit 410 von Fig. 5.

Illustrativ und vorzugsweise ist an der ersten Führungsschiene 110 ein erstes Ende 431 eines ersten Verbindungselements 421 sowie ein zweites Ende 432 eines zweiten Verbindungselements 422 jeweils über zugeordnete Befestigungselemente 320, 410 fixiert. Darüber hinaus ist an der zweiten Führungsschiene 130 bevorzugt ein zweites Ende 432 des ersten Verbindungselements 421 sowie ein erstes Ende 431 des zweiten Verbindungselements 422 über zugeordnete Befestigungselemente 320, 410 fixiert. Hierbei sind die zugeordneten Befestigungselemente 320, 410 vorzugsweise als Verfahrwegsbegrenzung der ersten und zweiten Führungsschiene 110, 130 an der Zwischenschiene 120 in der ausgefahrenen Position ausgebildet.

Bevorzugt sind die Befestigungselemente 320 mittig auf der ersten und zweiten Führungsschiene 110, 130 angeordnet. Darüber hinaus sind die Befestigungseinheiten 410 vorzugsweise jeweils an einem axialen Ende der ersten und zweiten Führungsschiene 110, 130 angeordnet.

Das Verbindungselement 421 ist illustrativ und vorzugsweise über das Befestigungselement 320 mittig an der ersten Führungsschiene 110 angeordnet und verläuft über eine Rolle 451 zur zweiten Führungsschiene 130. An der zweiten Führungsschiene 130 ist das Verbindungselement 421 über eine Befestigungseinheit 410 angeordnet.

Die Befestigungseinheit 410 ist dabei bevorzugt an der zweiten Führungsschiene 130 und dem zweiten Ende 102 der Teleskopschiene 100 zugewandt angeordnet. Des Weiteren ist vorzugsweise das zweite Verbindungselement 422 mit seinem zweiten Ende 432 an einem dem ersten Ende 101 der Teleskopschiene 100 zugewandten Ende der ersten Führungsschiene 110 befestigt.

Das Verbindungselement 422 wird vorzugsweise über eine Rolle 452 zur zweiten Führungsschiene 130 umgelenkt und ist dort bevorzugt über ein Befestigungselement 320 illustrativ mittig befestigt. Dabei ist das Verbindungselement 422 an seinem ersten axialen Ende 431 exemplarisch mittig an der zweiten Führungsschiene 130 angeordnet.

Illustrativ ist das zweite Ende 432 des Verbindungselements 421 an einem dem zweiten Ende 102 der Teleskopschiene 100 zugewandten zweiten Ende der Führungsschiene 442 angeordnet. Darüber hinaus ist das zweite Ende 432 des Verbindungselements 422 bevorzugt an einem dem ersten axialen Ende 101 der Teleskopschiene 100 zugewandten Ende 441 der ersten Führungsschiene 110 angeordnet.

Es wird jedoch darauf hingewiesen, dass die Befestigungseinheiten 410 der Verbindungselemente 421, 422 auch an einem gegenüberliegenden Ende der jeweiligen Führungsschiene 110, 130 angeordnet sein können. Des Weiteren können die Befestigungseinheiten 410 auch mittig an der jeweiligen Führungsschiene 110, 130 angeordnet sein, wobei die ersten Enden 431 der jeweiligen Verbindungselemente 421, 422 an einem axialen Ende der jeweils gegenüberliegenden Führungsschiene 110, 130 angeordnet sind.

Illustrativ sind in Fig. 6 zwei Verbindungselemente 220 bzw. 421, 422 gezeigt. Es wird jedoch darauf hingewiesen, dass die Teleskopschiene 100 auch mehr als zwei Verbindungselemente 220 aufweisen kann. So können die erste und zweite Führungsschiene 110, 130 z.B. auch jeweils über zwei Verbindungselemente 421, 422 verbunden sein.

Fig. 7 zeigt die Teleskopschiene 100 von Fig. 6 in der ausgefahrenen Position. Bei einem Bewegen von der zusammengefahrenen Position in die ausgefahrene Position der Teleskopschiene 100 ist vorzugsweise eine der Führungsschienen 110, 130 fest angeordnet und die Zwischenschiene 120 sowie die entsprechend andere der Führungsschienen 130, 110 können in axialer Richtung verschoben bzw. verfahren werden.

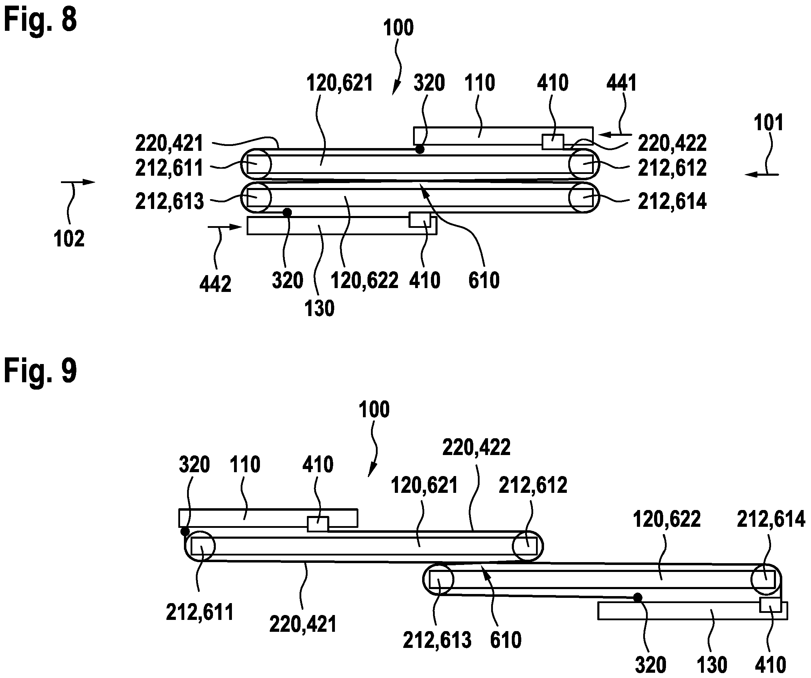

Fig. 8 zeigt die Teleskopschiene 100 von Fig. 1 mit der ersten und zweiten Führungsschiene 110, 130 sowie der Zwischenschiene 120. Im Gegensatz zu Fig. 1 weist die Zwischenschiene 120 nun jedoch zwei Schienenelemente 621, 622 auf, bzw. es sind zwei Zwischenschienen 621, 622 zur Ausbildung der Zwischenschiene 120 vorgesehen.

Analog zur Teleskopschiene 100 von Fig. 6 und Fig. 7 ist das Verbindungselement 422 über ein Befestigungselement 320 bevorzugt mittig an der ersten Führungsschiene 110 angeordnet. Das Verbindungselement 421 wird dabei vorzugsweise über ein dem zweiten Ende 102 der Teleskopschiene 100 zugewandtes Ende der Zwischenschiene 621 über eine Rolle 611 zu einem dem ersten Ende 101 der Teleskopschiene 100 zugewandten Ende der Zwischenschiene 622 umgeleitet bzw. an der Rolle 614 zur zweiten Führungsschiene 130 geführt. Das Verbindungselement 421 ist dabei bevorzugt an der zweiten Führungsschiene 130 über die Befestigungseinheit 410 befestigt.

Des Weiteren ist das Verbindungselement 422 bevorzugt an der ersten Führungsschiene 110 über die Befestigungseinheit 410 fixiert. Das Verbindungselement wird vorzugsweise über eine Rolle 612, die an einem dem ersten Ende 101 der Teleskopschiene 100 zugewandten Ende der Zwischenschiene 621 angeordnet ist, sowie über eine Rolle 613, die an einem dem zweiten Ende 102 der Teleskopschiene 100 zugewandten Ende der Zwischenschiene 622 angeordnet ist, zur zweiten Führungsschiene 130 geleitet. An der zweiten Führungsschiene 130 ist wiederrum das Verbindungselement 320 fixiert.

Es wird darauf hingewiesen, dass in Fig. 8 zeichnerisch der Eindruck entsteht, dass sich die Verbindungselemente 421, 422 an einer Stelle 610 zwischen den Zwischenschienen 621, 622 kreuzen. Dies ist jedoch nichtzutreffend und wird in Fig. 10 näher beschrieben, wobei klargestellt wird, dass sich die Verbindungselemente 421, 422 nicht an der Stelle 610 kreuzen.

Fig. 9 zeigt die Teleskopschiene 100 von Fig. 8 in der ausgefahrenen Position. Analog zu Fig. 7 wird auch hier eine der Führungsschienen 110, 130 fest angeordnet, wobei sich bei einem Verfahren in die ausgefahrene Position die zwei Zwischenschienen 621, 622 sowie die entsprechend andere der Führungsschienen 130, 110 verschieben bzw. verfahren lassen. Die Teleskopschiene 100 von Fig. 9 kann wiederrum eine beliebige Anzahl von Zwischenschienen 120 aufweisen, wie beispielhaft in Fig. 8 beschrieben, wobei die Zwischenschienen 120 jeweils zwei Rollen 212 aufweisen.

Fig. 10 zeigt die Stelle 610 von Fig. 8. Bevorzugt wird an dieser Stelle 610 durch eine außermittige Anordnung der Rollen 611, 612 an der Zwischenschiene 621, sowie analog hierzu der Rollen 613, 614 von Fig. 8 an der Zwischenschiene 622 von Fig. 8, eine Kreuzung der Verbindungselemente 421, 422 vermieden.

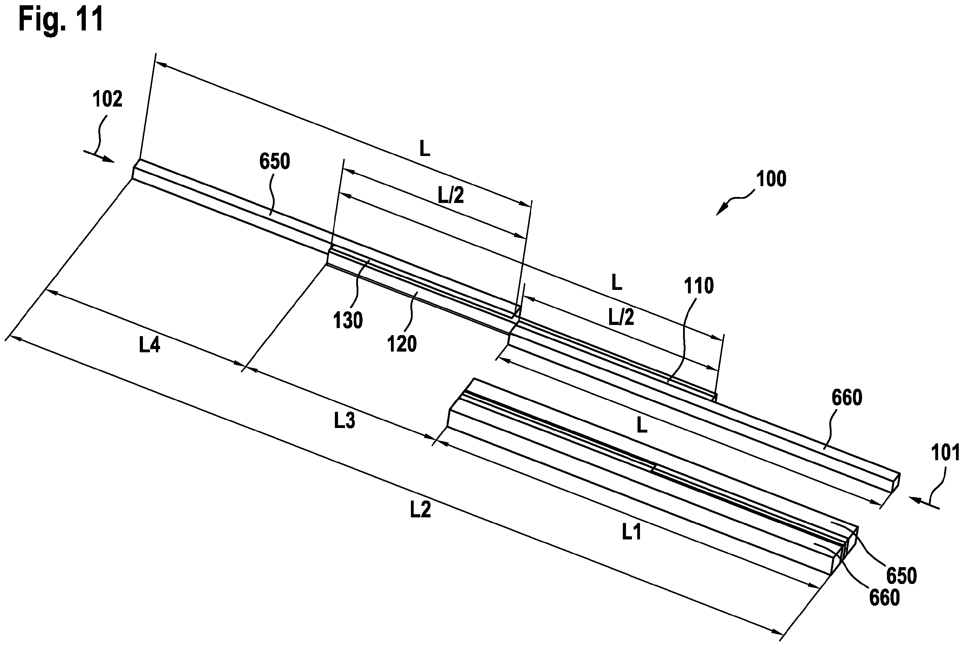

Fig. 11 zeigt die Teleskopschiene 100 von Fig. 1 in der zusammengefahrenen Position sowie in der ausgefahrenen Position. Bevorzugt weisen die erste und zweite Führungsschiene 110, 130 jeweils eine Länge L/2 auf und die Zwischenschiene 120 weist eine Länge L auf. Es wird jedoch darauf hingewiesen, dass die erst und zweite Führungsschiene 110, 130 auch die Länge L aufweisen können.

Durch die Ausbildung der ersten und/oder zweiten Führungsschiene 110, 130 mit der Länge L/2, d. h. durch die Bereitstellung einer im Vergleich zur Zwischenschiene 120 verkürzten Führungsschiene 110, 130, kann eine kompakte Führungsschiene 110, 130 mit reduziertem Gewicht bereitgestellt werden.

Bevorzugt entspricht die Länge L einer ersten Länge L1 der Teleskopschiene 100 in der zusammengefahrenen Position. Die erste und zweite Führungsschiene 110, 130 weisen vorzugsweise jeweils ein Verbindungselement 650, 660 auf. Bevorzugt weisen die Verbindungselemente 650, 660 die Länge L auf. Gemäß einer Ausführungsform sind die Verbindungselemente 650, 660 als Platten ausgebildet. Dabei sind die Verbindungselemente 650, 660 derart an der ersten und zweiten Führungsschiene 110, 130 angeordnet, dass die Teleskopschiene in der ausgefahrenen Position eine Länge L2 aufweist, die zumindest annähernd der doppelten ersten Länge L1 entspricht. Bevorzugt entspricht ein relativer Verfahrweg L3 zwischen der ersten Führungsschiene 110 und der Zwischenschiene 120 sowie ein relativer Verfahrweg L4 zwischen der zweiten Führungsschiene 130 und der Zwischenschiene 120 zum Verfahren der Teleskopschiene 100 von der zusammengefahrenen Position in die ausgefahrene Position, oder umgekehrt, jeweils zumindest annähernd der Hälfte der ersten Länge L1.

Somit kann bei halbem relativem Auszugsweg der Zwischenschiene 120 über die Länge L3 und der zweiten Führungsschiene 130 über die Länge L4 ein komplettes Ausziehen der Teleskopschiene 100 bei einem Vollauszug auf die Länge L2 erfolgen. Dabei wird lediglich eine Längenänderung der Länge L1 auf die Länge L1 plus L3 plus L4 benötigt.

Fig. 12 zeigt die Zwischenschiene 120 mit den Wälzkörpern 108. An jedem Ende 441, 442 der Zwischenschiene 120 befindet sich eine Rolle 212. Die Wälzkörper 108 sind dabei in einem Wälzkörperschlitten 700 angeordnet. Hierbei ist jeweils ein Wälzkörperschlitten 700 auf einer Seitenfläche 798, 799 der Zwischenschiene 120 angeordnet und bevorzugt in den Laufbahnen 235, 236 (s. Fig. 2) der Zwischenschiene 120 geführt. Nach der Erfindung sind die Wälzkörperschlitten 700 mit der ersten und/oder zweiten Führungsschiene 110, 130 sowie mit einem Gegenstand, an dem die Teleskopschiene 100 angeordnet werden kann, verbunden. Hierbei sind die Wälzkörperschlitten 700 über eine Schraubverbindung oder eine Schweißverbindung, Pressverbindung, Klebeverbindung, Formschlussverbindung, mit der ersten und/oder zweiten Führungsschiene 110, 130 verbunden.

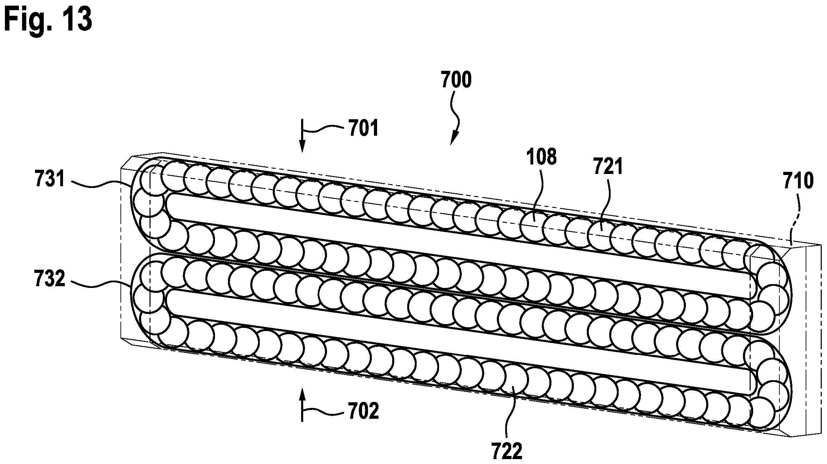

Fig. 13 zeigt den Wälzkörperschlitten 700 mit den Wälzkörpern 108 von Fig. 12. Der Wälzkörperschlitten 700 weist zumindest eine in sich geschlossene Umlaufbahn 731, 732 zum Führen der Wälzkörper 108 auf. Bevorzugt weist der Wälzkörperschlitten 700 einen Grundkörper 710 auf, wobei die zumindest eine Umlaufbahn 731, 732 im Grundkörper 710 angeordnet ist. Der Grundkörper 710 weist vorzugsweise Aluminium auf. Illustrativ ist eine erste und zweite Umlaufbahn 731, 732 im Grundkörper 710 angeordnet, wobei die erste Umlaufbahn 731 an einem illustrativ oberen Bereich des Grundkörpers 710 ausgebildet ist und die zweite Umlaufbahn 732 an einem illustrativ unteren Bereich des Grundkörpers 710 ausgebildet ist. Vorzugsweise ist die erste Umlaufbahn 731 zur Aufnahme einer ersten Mehrzahl 721 von Wälzkörpern 108 und die zweite Umlaufbahn 732 ist zur Aufnahme einer zweiten Mehrzahl 722 von Wälzkörpern 108 ausgebildet. Dabei sind die Wälzkörper 108 der Mehrzahl 721, 722 von Wälzkörpern 108 vorzugsweise nicht mit einander verbunden, d.h. sie bilden keine Wälzkörperkette aus.

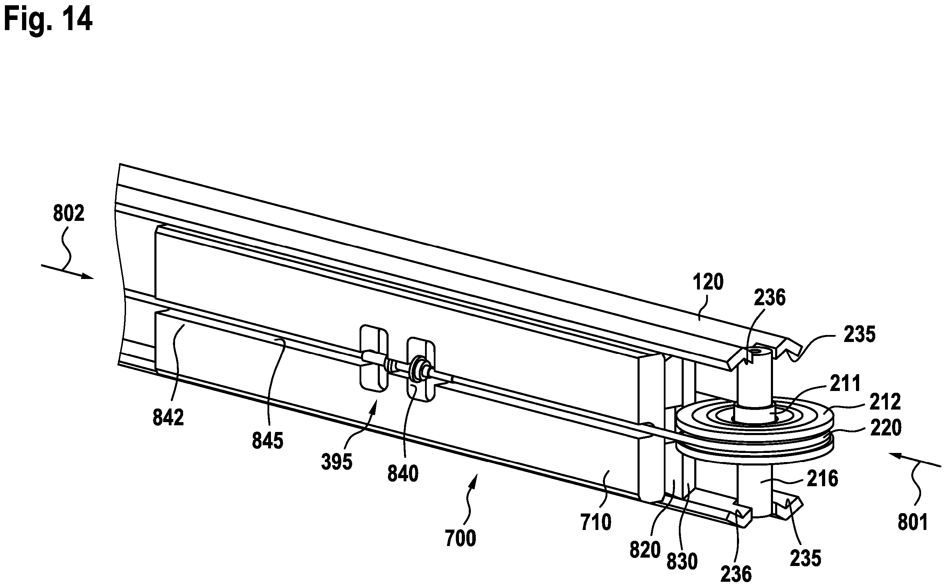

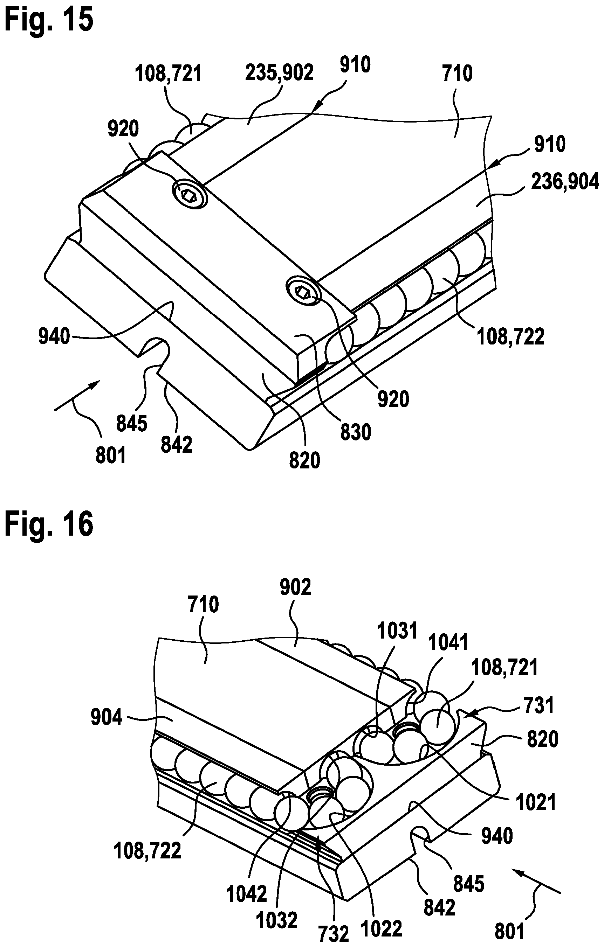

Fig. 14 zeigt die Zwischenschiene 120 mit dem Wälzkörperschlitten 700 von Fig. 12 und verdeutlicht die Anordnung des Wälzkörperschlittens 700 an der Zwischenschiene 120. Der Wälzkörperschlitten 700 ist dabei zur Führung an den illustrativ linken Laufbahnen 236 der Zwischenschiene 120 angeordnet. An seinen axialen Enden 801, 802 weist der Wälzkörperschlitten 700 bzw. der Grundkörper 710, jeweils ein Umlenkelement 820 zum Umlenken der Wälzkörper 108 von einem Führungsabschnitt (1041, 1042 in Fig. 16) in einen Rückführungsabschnitt (1031, 1032 in Fig. 16), und umgekehrt, auf. Dem Umlenkelement 820 ist vorzugsweise ein Deckelelement 830 zugeordnet, durch das eine einfache Anordnung der Wälzkörper 108 in den Umlaufbahnen 731, 732 von Fig. 13 ermöglicht wird. Hierbei sind die Umlenkelemente 820 mit den Deckelelementen 830 an einer der Zwischenschiene 120 zugewandten Seite des Wälzkörperschlittens 700 angeordnet.

Des Weiteren weist der Wälzkörperschlitten 700, insbesondere der Grundkörper 710, an seiner einer der ersten oder zweiten Führungsschiene 110, 130 zugewandten Seite, bzw. an seiner von der Zwischenschiene 120 abgewandten Seite, eine Befestigungsoberfläche 842 auf. Ausgehend von der Befestigungsoberfläche 842 ist vorzugsweise eine Längsnut 845 in den Grundkörper 710 eingebracht, die dazu ausgebildet ist, das Verbindungselement 220 sicher und geschützt zu führen. Des Weiteren ist an der Befestigungsoberfläche 842 ein Aufnahmebereich 840 zur Anordnung der Spannvorrichtung 395 vorgesehen. Alternativ kann die Befestigungsoberfläche 842 auch mit einem Steg versehen sein. Dabei kann vorzugsweise die erste und/oder zweite Führungsschiene 110, 130 eine dem Steg zugeordnete, komplementäre Form aufweisen, sodass eine sichere und robuste Anordnung erfolgen kann, die gleichzeitig bauraumsparend ist. Hierbei kann ein derartiger Steg einstückig mit dem Grundkörper 710 ausgebildet sein oder über eine beliebige Verbindung, z.B. Schraub- oder Klebeverbindung, an diesem angeordnet sein.

Fig. 15 zeigt den Wälzkörperschlitten 700 von Fig. 12 bis Fig. 14, insbesondere das erste Ende 801 des Grundkörpers 710 mit dem Umlenkelement 820 und dem Deckelelement 830. Dabei weist der Grundkörper 710 illustrativ an seinem ersten Ende 801, bevorzugt an beiden Enden 801, 802, einen Absatz 940 mit einer geringeren Höhe auf, in dem vorzugsweise das Umlenkelement 820 mit dem Deckelelement 830 angeordnet ist. Vorzugsweise sind das Umlenkelement 820 und das Deckelelement 830 über eine Schraubverbindung mit illustrativ zwei Schraubelementen 920 am Grundkörper 710 befestigt. Jedoch kann das Umlenkelement 820 auch einstückig mit dem Grundkörper 710 ausgebildet sein.

Des Weiteren weist der Wälzkörperschlitten 700 bevorzugt zumindest ein Laufbahnteil 902, 904 zum Führen der Wälzkörper 108 der Mehrzahl 721, 722 von Wälzkörpern 108 an der Zwischenschiene 120 auf. Illustrativ und vorzugsweise sind die Laufbahnteile 902, 904 über eine Feder-Nut-Verbindung 910 am Wälzkörperschlitten 700 angeordnet. Jedoch können die Laufbahnteile 902, 904 auch einstückig mit dem Grundkörper 710 ausgebildet sein.

Fig. 16 zeigt den Wälzkörperschlitten 700 von Fig. 15 ohne das Deckelelement 830. Dabei verdeutlicht Fig. 16 die in sich geschlossenen Umlaufbahnen 731, 732 des Wälzkörperschlittens 700. Die Umlaufbahnen 731, 732 weisen vorzugsweise jeweils einen Rückführungsabschnitt 1031, 1032 und einen Führungsabschnitt 1041, 1042 auf. Dabei sind die Wälzkörper 108 der Mehrzahl 721, 722 von Wälzkörpern 108 am Führungsabschnitt 1041, 1042 an der jeweiligen Laufbahn 235, 236 der Zwischenschiene 120 geführt und der Rückführungsabschnitt 1031, 1032 ist bevorzugt innerhalb des Wälzkörperschlittens 700 angeordnet. Des Weiteren weist der Grundkörper 710 an seinen axialen Enden 801, 802 jeweils das Umlenkelement 820 auf, wobei das Umlenkelement 820 einen gekrümmten Laufbahnabschnitt 1021, 1022 zum Umlenken der Wälzkörper 108 vom Führungsabschnitt 1041, 1042 in den Rückführungsabschnitt 1031, 1032, und umgekehrt, aufweist. Hierbei weist das Laufbahnteil 902, 904 den Führungsabschnitt 1041, 1042 auf.

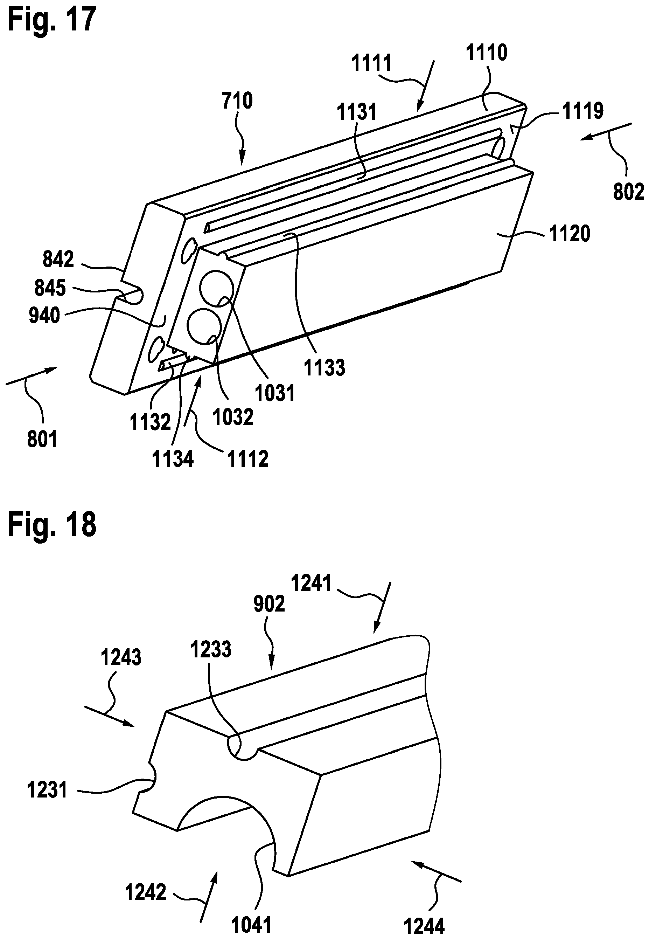

Fig. 17 zeigt den Grundkörper 710 des Wälzkörperschlittens 700 der vorhergehenden Figuren. Dabei werden ein Abschnitt 1110 und ein Führungsabschnitt 1120 des Grundkörpers 710 verdeutlicht. Dem Abschnitt 1110 ist dabei die Befestigungsoberfläche 842 zugeordnet, wobei auf der von der Befestigungsoberfläche 842 abgewandten Seite des Abschnitts 1110 der Führungsabschnitt 1120 angeordnet ist. Zur Ausbildung der bevorzugten Feder-Nut-Verbindung 910 von Fig. 15 zwischen dem Grundkörper 710 und den Laufbahnteilen 902, 904 weisen der Abschnitt 1110 und der Führungsabschnitt 1120 jeweils zumindest einen Steg 1131, 1132, 1133, 1134 auf.

Dabei sind die Stege 1131, 1132 des Abschnitts 1110 an einer von der Befestigungsoberfläche 842 abgewandten Seitenfläche 1119 des Abschnitts 1110 angeordnet. Bevorzugt sind die Stege im Bereich eines dem illustrativ oberen und unteren Ende 1111, 1112 des Grundkörpers 710 zugewandten Ende angeordnet. Die Stege 1133, 1134 sind jeweils an einem dem illustrativ oberen und unteren Ende 1111, 1112 zugewandten Bereich des Führungsabschnitts 1120 angeordnet. Der Führungsabschnitt 1120 ist bevorzugt mittig am Abschnitt 1110 angeordnet. Der Führungsabschnitt 1120 weist bevorzugt die Rückführungsabschnitte 1031, 1032 auf. Dabei sind der Abschnitt 1110 und der Führungsabschnitt 1120 bevorzugt einstückig ausgebildet.

Des Weiteren verdeutlicht Fig. 17 die an den axialen Enden 801, 802 ausgebildeten Absätze 940 zur Anordnung der Umlenkelemente 820 von Fig. 14 und der Deckelelemente 830 von Fig. 14. Bevorzugt ist der Grundkörper 710 als Frästeil ausgebildet.

Fig. 18 zeigt einen Abschnitt des Laufbahnteils 902 der vorhergehenden Figuren, wobei das Laufbahnteil 902 stellvertretend für beide Laufbahnteile 902, 904 beschrieben wird. Das Laufbahnteil 902 weist vorzugsweise einen zylindrischen Grundkörper mit einer illustrativ dargestellten Oberseite 1241, einer Unterseite 1242, einer illustrativ linken Seitenfläche 1243 und einer illustrativ rechten Seitenfläche 1244 auf. Dabei weist eine Seite, illustrativ die Unterseite 1242, den Führungsabschnitt 1041 zum Führen der Wälzkörper 108 auf. Des Weiteren weisen zwei Seiten, illustrativ die Oberseite 1241 und die linke Seitenfläche 1243, jeweils eine Nut 1231, 1233 zur Anordnung der Stege 1131, 1133 bzw. 1132, 1134 von Fig. 17 auf.

## Patentansprüche

1. Teleskopschiene (100) mit einer ersten und einer zweiten Führungsschiene (110, 130) und mit einer Zwischenschiene (120), wobei die erste Führungsschiene (110) über Wälzkörper (108) an einer ersten Laufbahn (235) der Zwischenschiene (120) zwangsgeführt ist und die zweite Führungsschiene (130) über Wälzkörper (108) an einer zweiten, zur ersten Laufbahn (235) parallel verlaufenden Laufbahn (236) der Zwischenschiene (120) zwangsgeführt ist, wobei die erste und zweite Führungsschiene (110, 130) sowie die Zwischenschiene (120) über mindestens zwei längliche Verbindungselemente (220; 421, 422) bei einem Bewegen von einer zusammengefahrenen Position in eine ausgefahrene Position, oder umgekehrt, synchronisiert sind, wobei an der ersten Führungsschiene (110) ein erstes Ende (431) eines ersten Verbindungselements (421) sowie ein zweites Ende (432) eines zweiten Verbindungselements (422) und an der zweiten Führungsschiene (130) ein zweites Ende (432) des ersten Verbindungselements (421) sowie ein erstes Ende (431) des zweiten Verbindungselements (422) fixiert sind, und wobei die Wälzkörper (108) zum Führen der ersten und zweiten Führungsschiene (110, 130) an der Zwischenschiene (120) jeweils in einem Wälzkörperschlitten (700) geführt sind, **dadurch gekennzeichnet, dass** jeder Wälzkörperschlitten (700) zumindest eine in sich geschlossene Umlaufbahn (731, 732) zum Führen der Wälzkörper (108) aufweist und die Wälzkörperschlitten (700) mit der ersten und/oder zweiten Führungsschiene (110, 130) über eine Schraubverbindung, Schweißverbindung, Pressverbindung, Klebeverbindung oder Formschlussverbindung verbunden sind.

2. Teleskopschiene nach Anspruch 1, **dadurch gekennzeichnet, dass** die in sich geschlossenen Umlaufbahnen (731, 732) jeweils einen Rückführungsabschnitt (1031, 1032) und einen Führungsabschnitt (1041, 1042) aufweisen, wobei die Wälzkörper (108) am Führungsabschnitt (1041, 1042) an der jeweiligen Laufbahn (235, 236) der Zwischenschiene (120) geführt sind und der Rückführungsabschnitt (1031, 1032) innerhalb des Wälzkörperschlittens (700) angeordnet ist.

3. Teleskopschiene nach Anspruch 2, **dadurch gekennzeichnet, dass** der Wälzkörperschlitten (700) einen Grundkörper (710) aufweist, der an seinen axialen Enden (801, 802) jeweils ein Umlenkelement (820) mit einem gekrümmten Laufbahnabschnitt (1021, 1022) zum Umlenken der Wälzkörper (108) vom Führungsabschnitt (1041, 1042) in den Rückführungsabschnitt (1031, 1032), und umgekehrt, aufweist.

4. Teleskopschiene nach einem der vorhergehenden Ansprüche, **dadurch gekennzeichnet, dass** der Wälzkörperschlitten (700) zumindest ein Laufbahnteil (902, 901) zum Führen der Wälzkörper (108) an der Zwischenschiene (120) aufweist, wobei das Laufbahnteil (902, 904) über eine Feder-Nut-Verbindung (910) am Wälzkörperschlitten (700) angeordnet ist.

5. Teleskopschiene nach Anspruch 4, **dadurch gekennzeichnet, dass** das Laufbahnteil (902, 904) den Führungsabschnitt (1041, 1042) aufweist.

6. Teleskopschiene nach einem der vorhergehenden Ansprüche, **dadurch gekennzeichnet, dass** die Verbindungselemente (421, 422) an der jeweiligen Führungsschiene (110, 130) jeweils über zugeordnete Befestigungselemente (320, 410) fixiert sind, wobei die zugeordneten Befestigungselemente (320, 410) als Verfahrwegsbegrenzung der ersten und zweiten Führungsschiene (110, 130) an der Zwischenschiene (120) in der ausgefahrenen Position ausgebildet sind.

7. Teleskopschiene nach Anspruch 6, **dadurch gekennzeichnet, dass** zumindest ein zugeordnetes Befestigungselement (320; 410) an einer der Zwischenschiene (120) zugewandten Längsseite (299) der ersten und/oder zweiten Führungsschiene (110, 130) angeordnet ist.

8. Teleskopschiene nach einem der vorhergehenden Ansprüche, **dadurch gekennzeichnet, dass** an dem zweiten Ende (432) des ersten Verbindungselements (421) und/oder dem zweiten Ende (432) des zweiten Verbindungselements (422) eine Spannvorrichtung (395) zum manuellen Spannen des ersten und/oder zweiten Verbindungselements (220) vorgesehen ist.

9. Teleskopschiene nach einem der Ansprüche 1 bis 7 und Anspruch 8, **dadurch gekennzeichnet, dass** der Wälzkörperschlitten (700) einen Aufnahmebereich (840) zur Anordnung der Spannvorrichtung (395) aufweist.

10. Teleskopschiene nach einem der vorhergehenden Ansprüche, **dadurch gekennzeichnet, dass** das erste und/oder zweite Verbindungselement (220) nach Art eines Seils, eines Riemens und/oder einer Kette ausgebildet ist und dazu ausgebildet ist, Druckkräfte und/oder Zugkräfte aufzunehmen.

11. Teleskopschiene nach einem der vorhergehenden Ansprüche, **dadurch gekennzeichnet, dass** die Zwischenschiene (120) an jedem ihrer Enden (441, 442) zumindest eine Rolle (212) zum Umlenken des ersten und/oder zweiten Verbindungselements (220) aufweist.

12. Teleskopschiene nach einem der vorhergehenden Ansprüche, **dadurch gekennzeichnet, dass** die erste und zweite Führungsschiene (110, 130) sowie die Zwischenschiene (120) jeweils eine Länge (L) aufweisen, die einer ersten Länge (L1) der Teleskopschiene (100) in der zusammengefahrenen Position entspricht, wobei die Teleskopschiene (100) in der ausgefahrenen Position eine zweite Länge (L2) aufweist, die zumindest annähernd der doppelten ersten Länge (L1) entspricht, und wobei ein relativer Verfahrweg zwischen der ersten Führungsschiene (110) und der Zwischenschiene (120) sowie der zweiten Führungsschiene (130) und der Zwischenschiene (120) zum Bewegen der Teleskopschiene (100) von der zusammengefahrenen Position in die ausgefahrene Position, oder umgekehrt, jeweils zumindest annähernd der Hälfte der ersten Länge (L3) entspricht.

13. Teleskopschiene nach einem der vorhergehenden Ansprüche, **dadurch gekennzeichnet, dass** die Zwischenschiene (120) über eine direkte Anbindung mit einer translatorischen Bewegungseinheit (240) verbindbar ist.

## Claims

1. Telescopic rail (100) with a first and a second guide rail (110, 130) and with an intermediate rail (120), wherein the first guide rail (110) is forcibly guided via rolling elements (108) on a first track (235) of the intermediate rail (120) and the second guide rail (130) is forcibly guided via rolling elements (108) on a second track (236) of the intermediate rail (120) which is running in parallel to the first track (235), wherein the first and second guide rails (110, 130) and the intermediate rail (120) are synchronized via at least two elongated connecting elements (220; 421, 422) when moving from a compacted position into an extended position, or vice versa, wherein a first end (431) of a first connecting element (421) and a second end (432) of a second connecting element (422) are fixed to the first guide rail (110) and a second end (432) of the first connecting element (421) and a first end (431) of the second connecting element (422) are fixed to the second guide rail (130), and wherein the rolling elements (108) for guiding the first and second guide rails (110, 130) on the intermediate rail (120) are respectively guided in a rolling element slide (700), **characterized in that** each rolling element slide (700) comprises at least one self-contained circulating track (731, 732) for guiding the rolling elements (108), and the rolling element slides (700) are connected to the first and/or second guide rail (110, 130) via a screw connection, a welded connection, a press-fit connection, an adhesive connection or a form-fit connection.

2. Telescopic rail according to claim 1, **characterized in that** the self-contained circulating tracks (731, 732) respectively comprise a return section (1031, 1032) and a guide section (1041, 1042), wherein the rolling elements (108) are guided on the guide section (1041, 1042) on the respective track (235, 236) of the intermediate rail (120), and the return section (1031, 1032) is arranged inside of the rolling element slide (700).

3. Telescopic rail according to claim 2, **characterized in that** the rolling element slide (700) comprises a main body (710) that comprises on each one of its axial ends (801, 802) a redirecting element (820) with a curved track section (1021, 1022) for redirecting the rolling elements (108) from the guide section (1041, 1042) into the return section (1031, 1032), and vice versa.

4. Telescopic rail according to one of the preceding claims, **characterized in that** the rolling element slide (700) comprises at least one track part (902, 901) for guiding the rolling elements (108) on the intermediate rail (120), wherein the track part (902, 904) is arranged on the rolling element slide (700) via a tongue and groove connection (910).

5. Telescopic rail according to claim 4, **characterized in that** the track part (902, 904) comprises the guide section (1041, 1042).

6. Telescopic rail according to one of the preceding claims, **characterized in that** the connecting elements (421, 422) are fixed to the respective guide rail (110, 130) via associated fastening elements (320, 410), wherein the associated fastening elements (320, 410) are embodied as travel limitations of the first and second guide rails (110, 130) on the intermediate rail (120) in the extended position.

7. Telescopic rail according to claim 6, **characterized in that** at least one associated fastening element (320; 410) is arranged on a longitudinal side (299) of the first and/or second guide rail (110, 130) that faces the intermediate rail (120).

8. Telescopic rail according to one of the preceding claims, **characterized in that** a tensioning device (395) for manually tensioning the first and/or second connecting element (220) is provided at the second end (432) of the first connecting element (421) and/or the second end (432) of the second connecting element (422).

9. Telescopic rail according to one of claims 1 to 7 and claim 8, **characterized in that** the rolling element slide (700) comprises a receiving area (840) for the arrangement of the tensioning device (395).

10. Telescopic rail according to one of the preceding claims, **characterized in that** the first and/or second connecting element (220) is embodied in the form of a rope, a belt and/or a chain and is embodied to absorb compressive forces and/or tensile forces.

11. Telescopic rail according to one of the preceding claims, **characterized in that** the intermediate rail (120) comprises at least one roller (212) at each one of its ends (441, 442) for redirecting the first and/or second connecting element (220).

12. Telescopic rail according to one of the preceding claims, **characterized in that** the first and second guide rails (110, 130) and the intermediate rail (120) respectively comprise a length (L) that corresponds to a first length (L1) of the telescopic rail (100) in the compacted position, wherein the telescopic rail (100) in the extended position comprises a second length (L2) that corresponds at least approximately to twice the first length (L1), and wherein a relative travel distance between the first guide rail (110) and the intermediate rail (120) as well as between the second guide rail (130) and the intermediate rail (120) for moving the telescopic rail (100) from the compacted position to the extended position, or vice versa, respectively corresponds at least approximately to half of the first length (L3).

13. Telescopic rail according to one of the preceding claims, **characterized in that** the intermediate rail (120) is connectable to a translational movement unit (240) via a direct connection.

## Revendications

1. Rail télescopique (100) avec un premier et un second rails de guidage (110, 130) et avec un rail intermédiaire (120), le premier rail de guidage (110) étant guidé de façon forcée, via des éléments roulants (108), sur une première voie de roulement (235) du rail intermédiaire (120) et le second rail de guidage (130) étant guidé de façon forcée, via des éléments roulants (108), sur une seconde voie de roulement (236) du rail intermédiaire (120), parallèle à la première voie de roulement (235), selon lequel les premier et second rails de guidage (110, 130) et le rail intermédiaire (120) étant synchronisés par l'intermédiaire d'au moins deux éléments de liaison allongés (220, 421, 422) lors du passage d'une position fermée à une position ouverte ou inversement, selon lequel une première extrémité (431) d'un premier élément de liaison (421) ainsi qu'une seconde extrémité (432) d'un second élément de liaison (422) sont fixés au premier rail de guidage (110) et une seconde extrémité (432) du premier élément de liaison (421) ainsi qu'une première extrémité (431) du second élément de liaison (422) sont fixés au second rail de guidage (130), et selon lequel les éléments roulants (108) sont chacun guidé dans un coulisseau à éléments roulants (700) pour guider les premier et second rails de guidage (110, 130) sur le rail intermédiaire (120), **caractérisé en ce que** chaque coulisseau à éléments roulants (700) comporte au moins une voie de circulation fermée (731, 732) pour guider les éléments roulants (108), et les coulisseaux à éléments roulants (700) sont connectés avec le premier et/ou le deuxième rail de guidage (110, 130) par vissage, soudure, compression, collage ou imbrication de formes.

2. Rail télescopique selon la revendication 1, **caractérisé en ce que** chaque voie de circulation fermée (731, 732) comporte une section de retour (1031, 1032) et une section de guidage (1041, 1042), les éléments roulants (108) étant guidés sur la section de guidage (1041, 1042) de la voie de roulement (235, 236) respective du rail intermédiaire (120) et la section de retour (1031, 1032) étant disposée à l'intérieur du coulisseau à éléments roulants (700).

3. Rail télescopique selon la revendication 2, **caractérisé en ce que** le coulisseau à éléments roulants (700) comporte un corps de base (710), qui à ses extrémités axiales (801, 802) possède respectivement un élément de déviation (820) avec un tronçon courbé (1021, 1022) pour dévier les éléments roulants (108) de la section de guidage (1041, 1042) dans la section de retour (1031, 1032) et inversement.

4. Rail télescopique selon l'une des revendications précédentes, **caractérisé en ce que** le coulisseau à éléments roulants (700) comporte au moins une partie de voie (902, 901) pour guider les éléments roulants (108) sur le rail intermédiaire (120), la partie de voie (902, 904) étant arrangée sur le coulisseau à éléments roulants (700) par une liaison rainure et languette (910).

5. Rail télescopique selon la revendication 4, **caractérisé en ce que** la partie de voie (902, 904) comporte la section de guidage (1041, 1042).

6. Rail télescopique selon l'une des revendications précédentes, **caractérisé en ce que** les éléments de liaison (421, 422) sont fixés au rail de guidage respectif (110, 130), via des éléments de fixation associés (320, 410), les éléments de fixations associés (320, 410) formant une limitation de déplacement des premier et second rails de guidage (110, 130) sur le rail intermédiaire (120) dans la position ouverte.

7. Rail télescopique selon la revendication 6, **caractérisé en ce que** au moins un élément de fixation associé (320, 410) soit arrangé sur un côté longitudinal (299) des premier et/ou second rails de guidage (110, 130) faisant face au rail intermédiaire (120).

8. Rail télescopique selon l'une des revendications précédentes, **caractérisé en ce qu'**à la seconde extrémité (432) du premier élément de liaison (421) et/ou à la seconde extrémité (432) du second élément de liaison (422) un dispositif de tension (395) est prévu pour tendre manuellement le premier et/ou le second élément de liaison (220).

9. Rail télescopique selon l'une des revendications 1 à 7 avec la revendication 8, **caractérisé en ce que** le coulisseau à éléments roulants (700) comporte une zone de logement (840) pour l'agencement du dispositif de tension (395).

10. Rail télescopique selon l'une des revendications précédentes, **caractérisé en ce que** le premier et/ou le second élément de liaison (220) est formé à la manière d'un câble, d'une courroie ou d'une chaîne et conçu pour absorber des forces de pression ou de traction.

11. Rail télescopique selon l'une des revendications précédentes, **caractérisé en ce que** le rail intermédiaire (120) présente au moins un galet (212) à chacune de ses extrémités (441, 442) pour dévier le premier et/ou le second élément de liaison (220).

12. Rail télescopique selon l'une des revendications précédentes, **caractérisé en ce que** le premier et le second rails de guidage (110, 130) ainsi que le rail intermédiaire (120) présentent chacun une longueur (L) correspondant à une première longueur (L1) du rail télescopique (100) en position fermée, le rail télescopique (100) en position ouverte présentant une seconde longueur (L2) correspondant approximativement au double de la première longueur (L1), et selon lequel une distance de course relative entre le premier rail de guidage (110) et le rail intermédiaire (120) ainsi qu'entre le second rail de guidage (130) et le rail intermédiaire (120) pour bouger le rail télescopique (100) de la position fermée à la position ouverte, ou inversement, correspond respectivement, au moins approximativement, à la moitié de la première longueur (L3).

13. Rail télescopique selon l'une des revendications précédentes, **caractérisé en ce que** le rail intermédiaire (120) peut être relié à une unité de mouvement de translation (240) par une liaison directe.
